(19) Europäisches Patentamt
European Patent Office
Office européen des brevets

(11) **EP 2 858 274 A2**

(12) **EUROPEAN PATENT APPLICATION**

(43) Date of publication:
08.04.2015 Bulletin 2015/15

(51) Int Cl.:
*H04B 13/02* (2006.01)

(21) Application number: 14179097.2

(22) Date of filing: 30.07.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 14.08.2013 JP 2013168636

(71) Applicant: Kabushiki Kaisha Toshiba
Tokyo (JP)

(72) Inventors:
• Nakanishi, Toshiyuki
Tokyo (JP)

• Sakata, Ren
Tokyo (JP)
• Hirano, Tatsuma
Tokyo (JP)
• Nguyen, Cam Ly
Tokyo (JP)

(74) Representative: Granleese, Rhian Jane
Marks & Clerk LLP
90 Long Acre
London WC2E 9RA (GB)

(54) **Communication device and method**

(57) A communication device includes a signal processing device, a transceiver, and a controller. The signal processing device uses a first signal medium. The transceiver communicates with at least one of first devices by using a second signal medium. The controller controls usage of the first signal medium by the communication device and the at least one of first devices by communicating with the at least one of first devices by the transceiver.

FIG. 3

## Description

FIELD

Embodiments described herein relate generally to a communication device and a communication method.

BACKGROUND

In general, an appropriate signal transmission medium for a communication varies with factors such as a surrounding environment and distance attenuation. Therefore, a communication device may be equipped with a transceiver for each signal transmission medium, and the communication device can switch between these transceivers based on a surrounding environment and distance attenuation.

One of the factors to degrade performance of an acoustic communication system, which is one example of a communication system, is the external environment. The factor of the external environment includes noise from the surrounding environment and deviation of directional characteristics caused by external action. Another factor is intra-system interference such as multi-user interference which is interference between user signals caused when the system accepts multiple users. Another factor is inter-system interference which is mutual interference between different systems. In an environmental measurement system, the mutual interference between systems is caused by interference between a signal of a transmission medium used by a communication system and a signal of the same transmission medium used for environmental measurement.

There is a problem of degrading performance of a communication or a measurement by factors of external environment, intra-system interference, and inter-system interference. The systems can be different communication systems, or different measurement systems, or a communication system and a measurement system.

BRIEF DESCRIPTION OF THE DRAWINGS

Fig. 1 is an exemplary diagram showing a composition of a communication system according to a first embodiment;
Fig. 2 is an exemplary block diagram showing a remote device according to the first embodiment;
Fig. 3 is an exemplary block diagram showing a head device according to the first embodiment;
Fig. 4 is an exemplary block diagram showing a local device according to the first embodiment;
Fig. 5 is an exemplary diagram showing a sequence of the communication system according to the first embodiment;
Fig. 6 is an exemplary block diagram showing an (i+1)-th head device according to a second embodiment;
Fig. 7 is an exemplary block diagram showing a head device other than the (i+1)-th head device;
Fig.8 is an exemplary diagram showing a sequence of a communication system according to the second embodiment;
Fig. 9 is an exemplary diagram showing a communication system according to a third embodiment;
Fig. 10 is a diagram showing an outline of a process of the communication system according to the third embodiment;
Fig. 11 is an exemplary block diagram showing a head device according to the third embodiment;
Fig. 12 is an exemplary diagram showing a sequence of a communication system according to the third embodiment;
Fig. 13 is an exemplary flowchart showing a process of an i-th head device according to the third embodiment;
Fig. 14 shows an exemplary flowchart showing a process of an (i+1)-th head device according to the third embodiment;
Fig. 15 is an exemplary block diagram showing a head device according to a fourth embodiment;
Fig. 16 is an exemplary diagram showing a sequence of a communication system according to the fourth embodiment;
Fig. 17 is an exemplary flowchart showing a process of an i-th head device according to the fourth embodiment;
Fig. 18 is an exemplary flowchart showing a process of an (i+1)-th head device according to the fourth embodiment;

DETAILED DESCRIPTION

In general, according to one embodiment, a communication device includes a signal processing device, a transceiver, and a controller. The signal processing device uses a first signal medium. The transceiver communicates with at least one of first devices by using a second signal medium. The controller controls a usage of the first signal medium from at least one of the communication device and the first devices by performing a communication with the at least one of first devices by the transceiver.

Hereinafter, various embodiments will be described with reference to the accompanying drawing as needed. In the embodiments, like reference numbers denote like elements, and duplicate descriptions are omitted.

First Embodiment

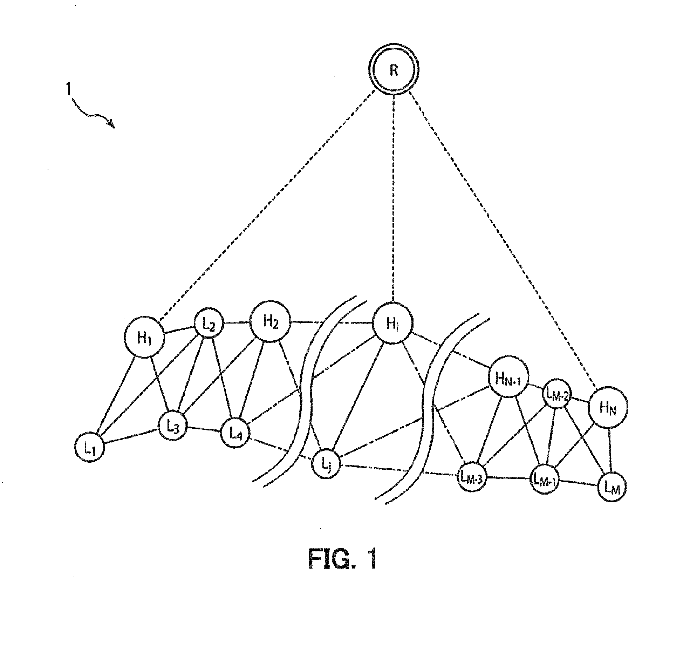

Fig. 1 is an exemplary diagram showing a composition of a communication system 1 according to a first embodiment. The communication system 1 includes a communication device of remote node R, N number of communication devices of head nodes $H_i$ ($1 \le i \le N$, i is an integer number), and M number of communication devices of local nodes $L_j$ ($1 \le j \le M$, j is an integer number). N is an integer number and equal to or greater than 2. M is an integer number. Hereinafter, the device of remote node is called a remote device, the device of head node is called a head device, and the device of local node is called a local device. The head devices $H_1, ..., H_N$ are generically called head device H. The devices of local nodes $L_1, ..., L_M$ are generically called local device L.

The communication system 1 includes at least two head devices H, and may not include local device L.

A distance between a remote device at remote node R, referred to herein as remote device R, and each head device $H_i$ is, for example, several thousand kilometers. Distances between the head devices $H_i$ are, for example, 10 to 100 meters.

In Fig. 1, dashed lines represent communication links between the remote device R and each head device $H_i$. The remote device R and each head device $H_i$ can communicate by a first signal transmission medium as shown by the dashed lines in Fig. 1. The first signal transmission medium is called the first medium.

Alternate long and short dash lines represent communication links between the head devices $H_i$, between the local devices $L_j$, or between the head device $H_i$ and the local device $L_j$. Communication by a second signal transmission medium can be used between the head devices $H_i$, between the local devices $L_j$, or between the head device $H_i$ and the local device $L_j$. The second signal transmission medium is called the second medium. For example, one of the head devices H can communicate with another head device H by the second medium directly or via one or more local devices L. The second medium may differ from the first medium and does not interfere with the first medium. The second medium may have a faster propagation speed than that of the first medium. For example, the first medium may be a sound wave and the second medium may be light, an electromagnetic wave, or a magnetic field.

In one example, the communication using the first medium is an underwater acoustic communication and the communication using the second medium is an electromagnetic communication, a magnetic field communication, or an optical communication under water. A long distance communication can be performed by using the acoustic communication in water. For the long distance communication by the underwater acoustic communication, a highly directional transducer can be used. The propagation speed of acoustic waves in water is about 1500 m/s. A 1 second delay occurs while the acoustic wave propagates 1.5 kilometers. On the other hand, communication using light, electromagnetic wave, or magnetic field can be applied for short distance communication in water. Propagation speeds of these signals are much faster than that of the acoustic signal. A propagation speed C in a medium is calculated by the following equation:

$$C = C_0 / \sqrt{\varepsilon}$$

In the equation, $C_0$ represents a propagation speed of light in a vacuum and $C_0$ is $3.0*10^8$ [m/s]. $\varepsilon$ represents a relative permittivity of the medium. The relative permittivity of water is 81. Therefore the propagation speed in water is $3.3*10^7$ [m/s].

In the case where the remote device R and the head device H are both in water and communicate by the acoustic signal, there is an issue to realize multiplexing of users (multiple access), specifically multiplex communications between the remote device R and each of the head devices H. If both of the remote device R and the head device H use high directional transducers, it is difficult to detect a signal transmitted from one of the head devices H by another head device H. The detection is called carrier sense.

Therefore if a multiple access based on carrier sense is applied, a packet collision can occur when the head devices H send acoustic data packets at the same time. Here, packet collision means acoustic signals reaching the remote device R at the same time, and the signals cannot be restored because the signals interfere each other.

To avoid this problem, the head device H may send a channel request to the remote device R before sending an acoustic data packet and the remote device R may give permission to the head device H. The permission given by the remote device R is a notice of permission for the usage of a channel to the head device H and a notice of inhibition for usage of the channel to other head devices H. As a result, packet collision can be avoided. However, an efficiency of multiple access (channel usage efficiency) is not high because signaling of the channel request or the permission is associated with above described propagation delay.

In this embodiment, the efficiency of multiple access of the first medium is improved by signaling using the second medium.

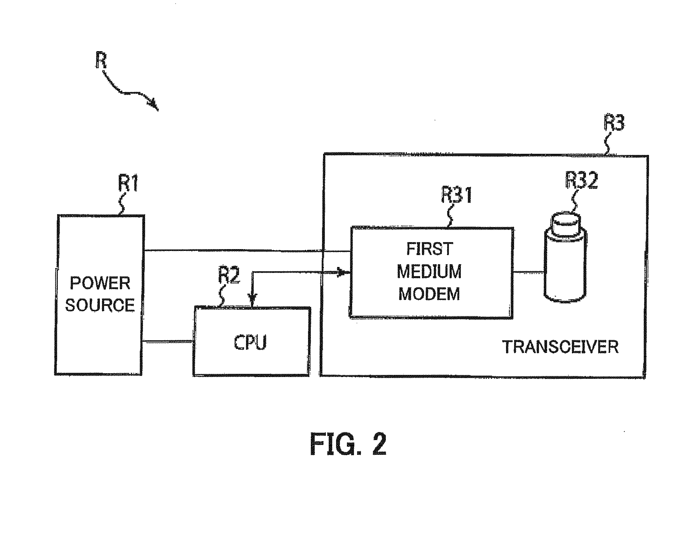

Fig. 2 is an exemplary block diagram showing the remote device R according to the first embodiment. The remote device R includes a power source R1, a CPU R2, and a transceiver R3. The transceiver R3 includes a first medium modem R31 and a transducer R32.

The power source R1 supplies power to the CPU R2 and the first medium modem R31. The CPU R2 controls the transceiver R3. The CPU R2, for example, outputs a digital signal for sending to the transceiver R3. The CPU R2, for example, receives a digital signal demodulated by the transceiver R3.

The transceiver can communicate with each of the head devices $H_i$ by using the first medium.

The first medium modem R31 modulates a digital signal inputted from the CPU R2 to an analog signal according to characteristics of a channel. The transducer R32 sends the analog signal to a specific head device $H_i$. The first medium modem R31 demodulates an analog signal received by the transducer R32 from a specific head device $H_i$ to a digital signal and outputs the digital signal obtained by the demodulation to the CPU R2.

The transducer R32 sends and receives an analog signal by the first medium.

The remote device R includes at least the first medium modem R31 and corresponding transducer R32, and can communicate with each head device $H_i$ by the first medium.

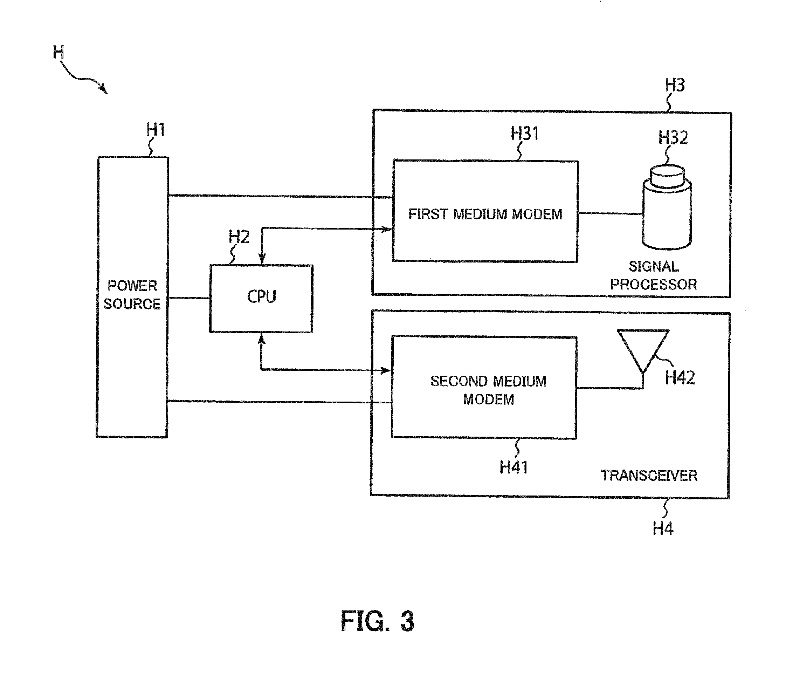

Fig. 3 is an exemplary block diagram showing the head device H according to the first embodiment. The head device H includes a power source H1, a CPU H2, a signal processor H3, and a transceiver H4.

The power source H1 supplies power to a first medium modem H31 and a second medium modem H41.

The CPU H2 communicates with the other head devices H via the second medium by using the transceiver H4. The CPU H2 serves as a controller to control a usage of the first medium by at least one of the signal processor H3 and the other communication devices.

Specifically, the CPU H2 serves as a controller to cause the transceiver H4 to send a control signal to another head device H by the second medium. The control signal is used for controlling a transmission or a measurement by using the first medium. If the transceiver H4 receives the control signal, the CPU H2 serves as a controller to control the usage of the first medium by the signal processor H3 based on the received control signal. As a result, the CPU H2 can control the usage of the first medium by the signal processor H3 and the other head devices.

The control signal is a signal to control a transmission or a measurement by using the first medium. Specifically, the control signal is a signal to control a data transmission by the first medium or a signal to control a measurement by the first medium. According to this embodiment, the control signal (first control signal) is, for example, a use request for requesting use of the first medium. If the transceiver H4 receives the use request, CPU H2 halts a communication using the first medium by the signal processor H3.

The CPU H2 controls the signal processor H3. The CPU H2 outputs to the signal processor H3 a digital signal for sending by the signal processor H3. The CPU H2 receives a digital signal demodulated by the signal processor H3.

The CPU H2 controls the transceiver H4. For example, the CPU H4 outputs to the transceiver H4 a digital signal for sending by the transceiver H4. The CPU H2, for example, receives a digital signal demodulated by the transceiver H4.

The CPU H2 controls the transceiver H4 to transmit the first control signal to at least one head device H other than this head device by the second medium. In this case, the first control signal is used to control the transmission via the first medium by the at least one head device H. The CPU H2 causes the transceiver H4 to send the use request to the at least one head device H by the second medium before the signal processor H3 sends a signal by the first medium. As a result, the CPU H2 can halt transmissions using the first medium by the other head devices H.

The signal processor H3 communicates with the remote device R by using the first medium. The signal processor H3 includes a first medium modem H31 and a first transducer H32. The first medium modem H31 modulates a digital signal inputted from the CPU H2 to an analog signal according to characteristics of a channel. The transducer H32 sends the analog signal to the remote device R. The first medium modem H31 demodulates an analog signal received by the transducer H32 from the remote device R to a digital signal and outputs the digital signal obtained by the demodulation to the CPU H2.

The first transducer H32 sends and receives an analog signal by the first medium.

The transceiver H4 communicates with at least one of the other communication devices by using the second medium. The transceiver H4, for example, sends the first control signal inputted from the CPU H2 to another head device. The transceiver H4 can send the first control signal to at least one head device H other than this communication device via a local device L allowing communication by the second medium.

The transceiver H4 receives the first control signal which was sent by a head device H other than this device using the second medium. Specifically, the transceiver H4 receives a use request sent by the head device H other than this device using the second medium, for example. If the transceiver H4 receives the use request via the second medium, the CPU H2 serves as a controller to halt a communication using the first medium by the signal processor H3. The transceiver H4 includes a second medium modem H41 and a second transducer H42.

The second medium modem H41 modulates a digital signal inputted from the CPU H2 to an analog signal according to characteristics of a channel. The second transducer H42 transmits the analog signal obtained by the modulation to another head device H. The second medium modem H41 demodulates an analog signal received by the transducer R42 from the head device H to a digital signal and outputs the digital signal to the CPU H2.

The second tranceiving device H42 sends and receives an analog signal by the second medium.

The head device H includes at least the first medium modem H31, first transducer H32 corresponding to the first medium modem H31, the second medium modem H41, and the second transducer H42 corresponding to the second medium modem H41.

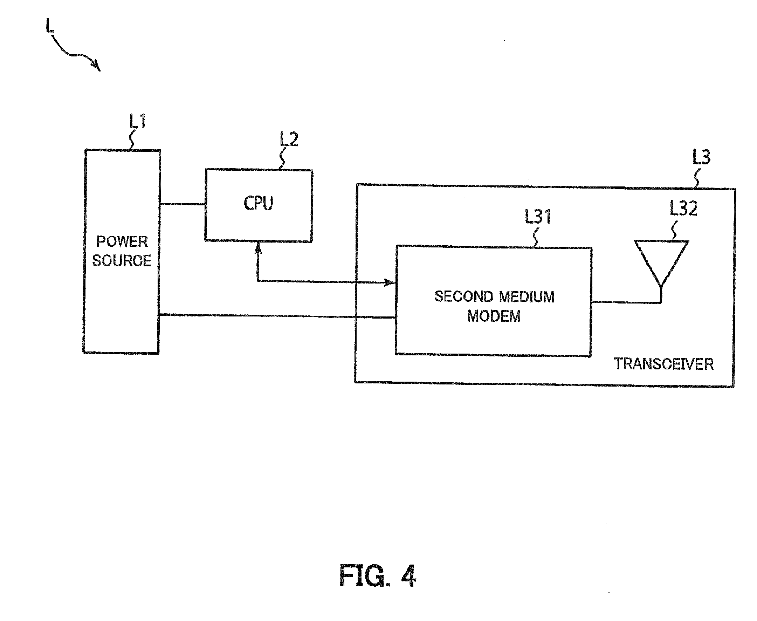

Fig. 4 is an exemplary block diagram showing the local device L. The local device L includes a power source L1, a CPU L2, and a transceiver L3.

The power source L1 supplies power to the CPU L2 and a second medium modem L31 in the transceiver L3.

The CPU L2 controls the transceiver L3. The CPU L2 refers to information regarding a destination of data included in a digital signal inputted from the transceiver L3. The CPU L2 controls the transceiver L3 to send a signal sent by one of the head devices $H_i$ and received by the transceiver L3 to another head device $H_k$ (k is an integer number other than i). The CPU L2 may control the transceiver L3 to send a signal received by the transceiver L3 to the head device $H_k$ (k is an integer number other than i) via another local device $L_j$.

The transceiver L3 can communicate with each head device $H_i$ or another local device $L_j$ by the second medium. The transceiver L3 includes the second medium modem L31 and a second transducer L32.

The second medium modem L31, for example, demodulates an analog signal received by the second tranceiving device L32 from a head device H to a digital signal. The second medium modem L31 outputs the digital signal obtained by the demodulation to the CPU L2. The second medium modem L31, for example, modulates a digital signal inputted from the CPU L2 to an analog signal according to characteristics of a channel. The transducer L32 sends the analog signal obtained by the modulation to a specific head device H or another local device L.

The second transducer L32 sends and receives an analog signal by the second medium.

The local device L includes at least the second medium modem L31 and corresponding second transducer L32.

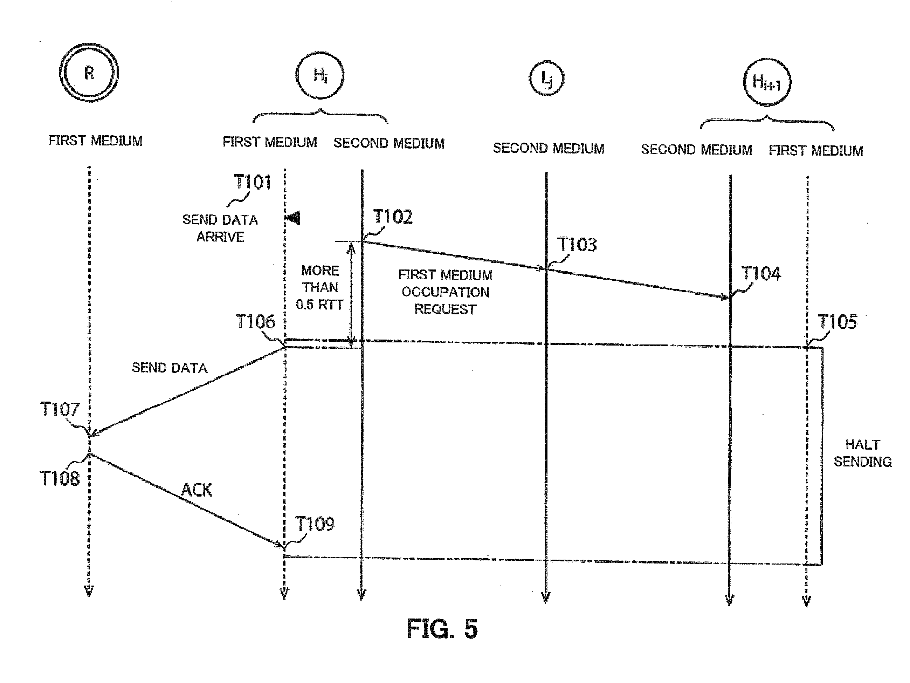

Fig. 5 is an exemplary diagram showing a sequence of the communication system 1 according to the first embodiment.

(T101) At first, an i-th head device $H_i$ obtains send data for sending to the remote device R by the first medium.

(T102) The i-th head device $H_i$ notifies a use request to surrounding head devices unilaterally. The surrounding head devices are, for example, (i+1)-th head device $H_{i+1}$ and the other head devices. The use request can be a predetermined signal sent using the second medium to inform of starting usage of the first medium.

(T103) A j-th local device $L_j$ between the i-th head device $H_i$ and (i+1)-th head device $H_{i+1}$ receives the occupation request, for example. The j-th local device $L_j$ sends the received use request to the (i+1)-th head device $H_{i+1}$ by using the second medium. Meanwhile the use request may be received by the surrounding head devices such as (i+1)-th head device $H_{i+1}$ directly from the i-th head device $H_i$.

(T104) The (i+1)-th head device $H_{i+1}$ receives the use request which was sent from the j-th local device $L_j$ by the second medium.

(T105) The (i+1)-the head device $H_{i+1}$ halts transmission by the first medium for a predetermined time length.

If the use request includes information regarding duration of the first medium use by the i-th head device $H_i$, (i+1)-th head device $H_{i+1}$ may halt sending by the first medium during the duration of use.

(T106) The i-th head device $H_i$ sends the send data by the first medium. The time T105 is a time elapsed a duration for reaching the signal to the surrounding head device by the second medium from the time T102. The duration is one-half of a round trip time (RTT). In other words, the i-th head device $H_i$ waits from the time T102 to elapse more than one-half of the RTT, and then starts sending the send data by the first medium.

(T107) The remote device R receives the send data from the i-th head device $H_i$ by the first medium.

(T108) The remote device R sends an ACK (Acknowledgement) to the i-th head device $H_i$ by the first medium.

(T109) The head device $H_i$ receives the ACK sent from the remote device R by the first medium.

The i-th head device $H_i$ can request use by radiating energy by the second medium before starting to use the first medium, when starting to use the first medium, or during use of the first medium. The i-th head device $H_i$ can light an LED during using the first medium. In this case, the surrounding head devices halt the sending by the first medium during a predetermined time period from detecting the radiated energy by the second medium or during detecting the energy.

As stated above, according to the first embodiment, the CPU H2 of the i-th head device $H_i$ can control the transceiver H4 to send a use request to at least one of the other head devices H by the second medium before the signal processor H3 starts sending a signal by the first medium. The transceiver H4 of the (i+1)-th head device $H_{i+1}$ can receive the use request which was sent from the i-th head device $H_i$ by the second medium. Then the CPU H2 of the (i+1)-th head device $H_{i+1}$ can halt the communication by the signal processor H3 by the first medium when the transceiver H4 receives the use request.

When the i-th head device $H_i$ communicates with the remote device R by the first medium, the other head devices halt communication by the first medium. Therefore, the remote device R can avoid receiving a plurality of signals by the first medium, and the remote device R can demodulate and decode a signal received by the first medium correctly. As a result, the i-th head device $H_i$ can improve performance of the communication with the remote device R.

In this embodiment, propagation speed of a signal of the second medium is faster than that of the first medium. Also, the distance between the i-th head device $H_i$ and the (i+1)-th head device $H_{i+1}$ is shorter than between the i-th head device $H_i$ and the remote device R. In this situation, a propagation delay of the signal of the second medium is much smaller than that of the first medium, so the efficiency of the multiple access control can be improved in comparison to signaling by using the first medium.

Although the communication by the first medium is used as an example in the above description, the same method can be applied to the measurement (for example, sonar) using the first medium. Specifically, the signal processor H3 can measure by the first medium. In this case, the i-th head device $H_i$ can send the use request to another head device H by the second medium before radiating or receiving the measurement signal by the first medium so as to prevent the another head device from radiating or receiving a communication signal or a measurement signal by the first medium.

The i-th head device $H_i$ can avoid a mutual interference with another head device which uses the same signal medium for communication or measurement as a signal of the environmental measurement of the i-th head device $H_i$. For example, the environmental measurement of the i-th head device $H_i$ is acoustic sonar and another head device communicates with another device by an acoustic communication using the same medium as acoustic sonar. As a result, the i-th head device $H_i$ can improve a performance of the environmental measurement.

Second Embodiment

According to a second embodiment, the packet collision in the first medium can be avoided more certainly than the first embodiment. The second embodiment is different from the first embodiment at the point that the head device $H_{i+1}$ is a master of controlling a transmission right and the other head devices $H_1 \sim H_i$, $H_{i+2} \sim H_N$ are slaves.

A composition of the remote device R in the second embodiment is the same as the composition of the remote device R shown in Fig.2 in the first embodiment, so the explanation is omitted. Also, a composition of the local device L in the second embodiment is the same as the composition of the local device L shown in Fig.4 in the first embodiment, so the explanation is omitted.

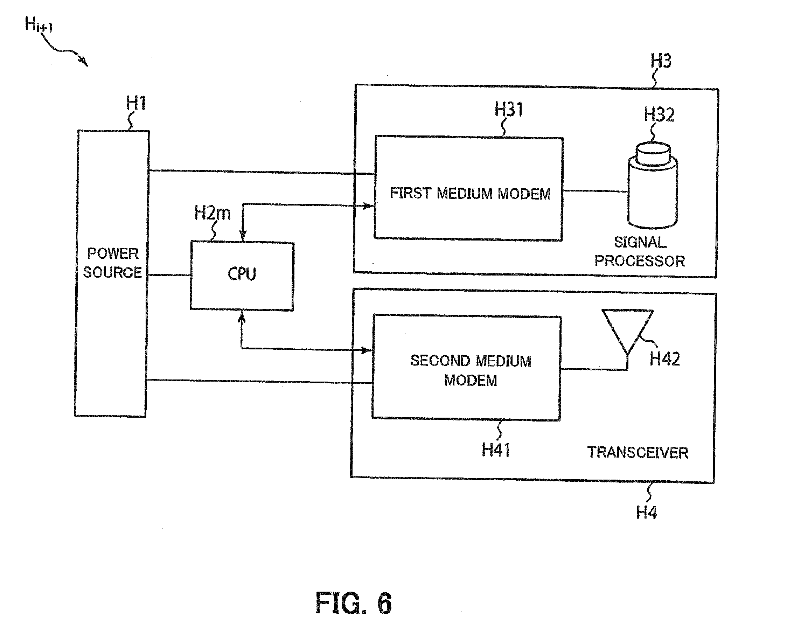

Fig. 6 is an exemplary block diagram showing the (i+1)-th head device $H_{i+1}$ according to the second embodiment. The (i+1)-th head device includes a power source H1, a CPU H2m, a signal processor H3, and a transceiver H4. Elements in common with Fig.3 have the same symbols and their detailed explanations are omitted.

When the transceiver H4 receives an occupation request from a i-th head device $H_i$, the CPU H2m gives a transmission right of the first medium to the i-th head device $H_i$ if the transmission right has not been given to another head device.

Specifically, when the transceiver H4 receives the occupation request from the i-th head device $H_i$, the CPU H2m determines whether the transmission right has been given to another head device or not. If the transmission right has not been already given to another head device, the CPU H2m controls the transceiver H4 to send an occupation permission of the first medium to surrounding head devices and the i-th head device $H_i$ by using the second medium, for example. The CPU H2m may send the occupation permission to the i-th head device $H_i$ via the local device $L_i$.

The occupation permission can be energy radiating by the second medium when the transmission right of the first medium is given to a head device H or during a predetermined time from the transmission right being given to the head device H. In this case, the surrounding head devices H can halt the transmission by the first medium during a predetermined time from detecting the energy by the second medium, or during detecting the energy by the second medium.

If the transmission right of the first medium has not given to another head device, the CPU H2m can halt the transmission by the first medium for a predetermined time.

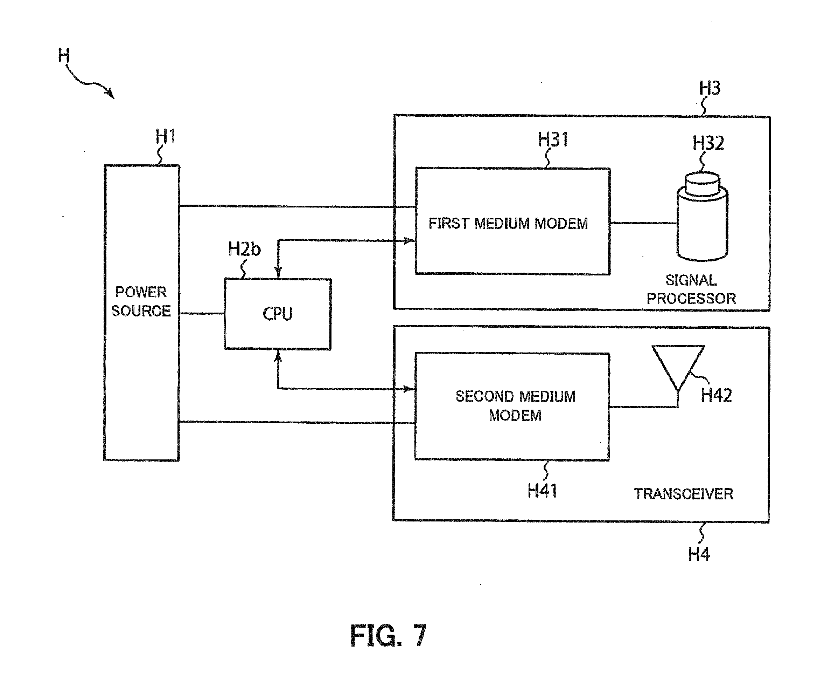

Fig. 7 is an exemplary block diagram showing a head device H other than the (i+1)-th head device $H_{i+1}$. Elements in common with Fig.3 have the same symbols and their detailed explanations are omitted. The composition of the head device H differs from the first embodiment in that the CPU H2 is modified to CPU H2b.

The CPU H2b sends an occupation request to the (i+1)-th head device $H_{i+1}$ by the second medium. The CPU H2b can send the occupation request to the (i+1)-th head device $H_{i+1}$ via the local device L.

The CPU H2b sends a send data to the remote device R by the first medium if the transceiver H4 receives the occupation permission from the (i+1)-th head device $H_{i+1}$ according to the occupation request.

If the CPU H2b has not sent an occupation request but receives occupation permission, the CPU H2b halts a transmission by the first medium for a predetermined time. As a result, a plurality of signals by the first medium do not reach the remote device R at the same time, and a success rate of decoding at the remote device R can be improved.

If the occupation permission includes time information to halt sending by the first medium, the CPU H2b can halt sending for the time information included in the occupation permission when the CPU H2b has not sent an occupation request and receives an occupation permission.

The head device H which has not sent an occupation request halts a sending by the first medium during a time indicated by the time information. As a result, a plurality of signals by the first medium do not reach the remote device R at the same time, and a success rate of decoding at the remote device R can be improved.

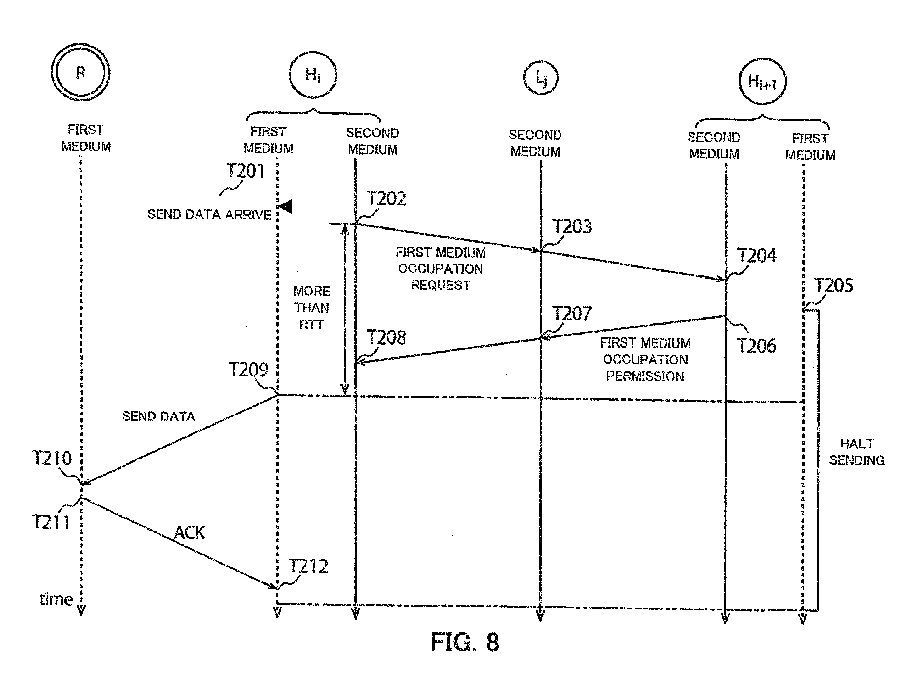

Fig.8 is an exemplary diagram showing a sequence of a communication system 1b according to the second embodiment.

(T201) At first, the i-th head device $H_i$ obtains a send data for sending by the first medium to the remote device R.

(T202) The i-th head device $H_i$ notifies an occupation request of the first medium to surrounding head devices unilaterally by using the second medium. The surrounding head devices are for example, (i+1)-th head device $H_{i+1}$ and the other head devices.

(T203) A j-th local device $L_j$ between the i-th head device $H_i$ and (i+1)-th head device $H_{i+1}$ receives the occupation request, for example. The j-th local device $L_j$ sends the received occupation request to the (i+1)-th head device $H_{i+1}$ by using the second medium. In this way, the j-th local device $L_j$ relays the occupation request sent from the i-th head device $H_i$ to the (i+1)-th head device $H_{i+1}$. Meanwhile the occupation request may be received by the surrounding head devices such as (i+1)-th head device $H_{i+1}$ directly from the i-th head device $H_i$.

(T204) The (i+1)-th head device $H_{i+1}$ receives the occupation request which was sent from the j-th local device $L_j$ by the second medium.

(T205) The (i+1)-th head device $H_{i+1}$ halts sending by the first medium for a predetermined time.

(T206) The (i+1)-th head device $H_{i+1}$ sends an occupation permission to the i-th head device $H_i$ by the second medium.

(T207) The j-th local device $L_j$ receives the occupation permission, for example. The j-th local device $L_j$ sends the received occupation permission to the i-th head device $H_i$ by using the second medium. In this way, the j-th local device $L_j$ relays the occupation permission sent from the (i+1)-th head device $H_{i+1}$ to the i-th head device $H_i$. Meanwhile the occupation permission may be received by the i-th head device $H_i$ directly from the (i+1)-th head device $H_{i+1}$.

(T208) The i-th head device $H_i$ receives the occupation permission from the j-th local device $L_j$. Around the same time, another head device H other than the i-th and (i+1)-th head devices receives the occupation permission. The another head device H has not sent an occupation request but receives an occupation permission, so the another head device H halts sending by the first medium for a predetermined time.

(T209) The i-th head device $H_i$ sends the send data by the first medium. The time T209 is a time elapsed a duration more than RTT to exchange signals by the second medium with the surrounding head device H.

(T210) The remote device R receives the send data which was sent from the i-th head device $H_i$ by the first medium.

(T211) The remote device R sends an ACK by the first medium to the first head device $H_i$.

(T212) The head device $H_i$ receives the ACK by the first medium which was sent from the remote device R.

In the second embodiment, the (i+1)-th head device $H_{i+1}$ expressly gives a transmission right of the first medium to the i-th head device $H_i$. Another head device which has not sent an occupation request and receives an occupation permission, halts sending by the first medium for a predetermined time, for example. As a result, a packet collision can be avoided more certainly than in the first embodiment.

Although the communication by the first medium is used as an example in the above description, the same method can be applied to the measurement (for example, sonar) by using the first medium. Specifically, the head device sends a control signal to another head device when the head device H radiates or receives a measurement signal. In this way, it is possible to prevent the another head device from radiating a communication signal or a measurement signal around the same time. A propagation delay of the second medium signal is very small, so the efficiency of the multiple access control can be improved compared with a signaling by using the first medium.

Third Embodiment

The remote device and the head device in Fig.1 are both in water. In this situation, there is another problem regarding a quality of a communication link. There are many factors to reduce a quality of the communication link in a propagation channel of an acoustic signal, such as various noises from surrounding environment, a long signal delay because of complicated reflection and inflection and a slow propagation speed, a Doppler shift caused by shaking because of waves and currents, a movement of a communication device caused by shaking, and deviation of directional characteristics by the movement. The third embodiment provides a method to improve the link quality of the first medium by a signaling using the second medium.

As the propagation delay of the first medium is long, sending one data and replying an ACK causes a large overhead. One solution is to send the same data a plurality of times continuously and to reply an ACK when the head device $H_i$ receives the data. In this case, a transmission interval needs a time length to disappear an echo well. The transmission interval may be several seconds. Therefore, if the communication device moves because of currents or the like, the communication might fail even if the data was sent a plurality times.

According to this embodiment, if the i-th head device $H_i$ fails to receive data, the i-th head device $H_i$ asks surrounding head device H for a substitute receiving to increase a success rate of the communication. A time length for signaling by the second medium is vanishingly short compared with the sending interval of the first medium which is several seconds. Therefore the surrounding head device H can start a substitute receiving before a next data by the first medium reaches the surrounding head device H.

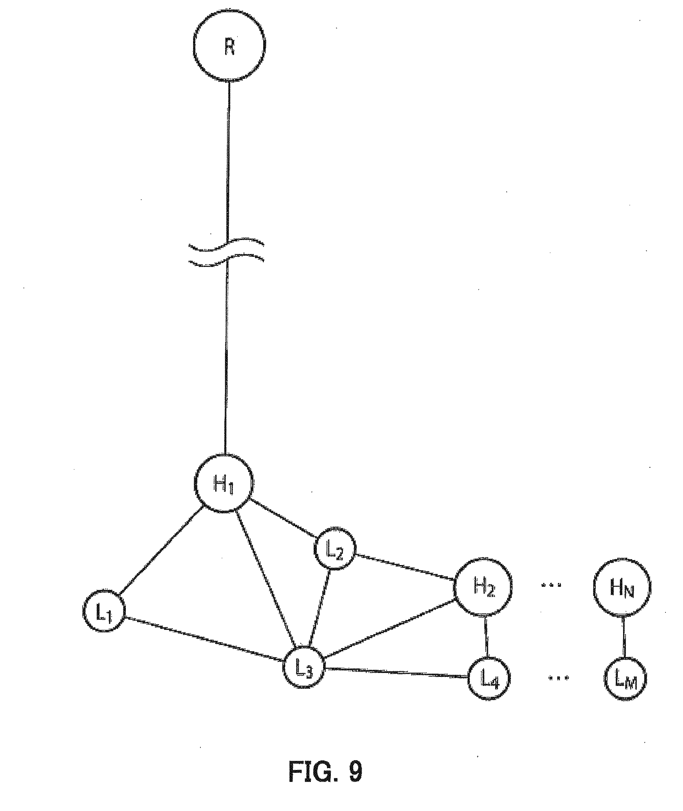

Fig. 9 is an exemplary diagram showing a communication system 1c according to the third embodiment.

The communication system 1c includes a remote device R, N number of communication devices of head nodes $H_i$ (1≤i≤N, i is an integer number), and M number of communication devices of local nodes $L_j$ (1≤j≤M, j is an integer number). N is an integer number and equal to or greater than 2. M is an integer number. A distance between the head device $H_1$ and the remote device R in the Fig. 9 is several thousand meters (for example, 6000m). An inter-nodes distance is, for example, 10-100 meters. The inter-nodes distance is a distance between the head nodes where the head devices H are positioned, a distance between the local nodes where the local nodes L are positioned, or a distance between the head node and the local node. The remote device R is disposed on a buoy on the ocean, for example. On the other hand, the head devices $H_1$, $H_2$, ... ,$H_N$ and the local devices $L_1$, $L_2$, ... ,$L_M$ disposed on the ocean floor, for example. In this embodiment, the first medium is assumed as an acoustic wave, and the second medium is assumed as an electromagnetic wave or a light.

A composition of the remote device R in the third embodiment is the same as the composition of the remote device R shown in Fig.2 in the first embodiment, so the explanation is omitted. Also, a composition of the local device L in the third embodiment is the same as the composition of the local device L shown in Fig.4 in the first embodiment, so the explanation is omitted.

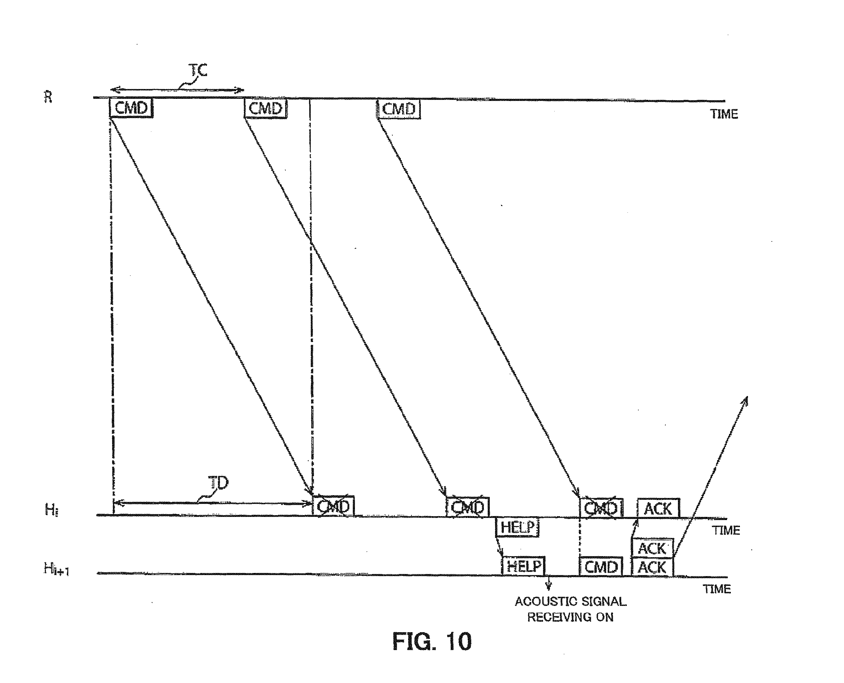

Fig. 10 is a diagram showing an outline of a process of the communication system 1c according to the third embodiment. In Fig.10 the horizontal axis expresses time. The propagation speed of an acoustic signal from the remote device R to the head device H is, for example, 1500 m/s. Assuming that the distance between the remote device R and the i-th head device $H_i$ is 6000 m, the propagation delay which is a time to propagate from the remote device R to the i-th head device $H_i$ is 4 seconds.

According to an example shown in Fig. 10, the remote device R sends the same command CMD 3 times by a predetermined time interval TC (for example, shorter than 4 seconds). The head device $H_i$ fails receiving commands CMD the first two times, so sends a substitute receiving request HELP to the (i+1)-th head device $H_{i+1}$ by the second medium (for example, light or electromagnetic wave). The (i+1)-th head device $H_{i+1}$ starts receiving by the first medium when the (i+1)-th head device $H_{i+1}$ receives the substitute receiving request HELP.

In the example shown in Fig. 10, the i-th head device $H_i$ fails receiving the third command CMD. On the other hand, the (i+1)-th head device $H_{i+1}$ succeeds in receiving the third command CMD. The (i+1)-th head device $H_{i+1}$ generates an ACK and sends the ACK to the head device $H_i$ and the remote device R. As a result, the (i+1)-th head device $H_{i+1}$ can notify the head device $H_i$ and the remote device R of success of the substitute receiving.

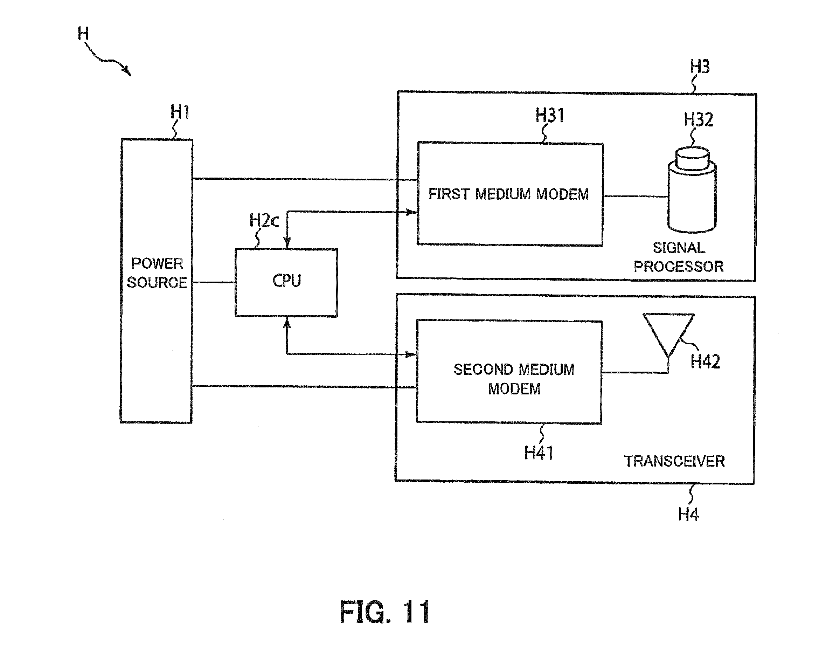

Fig. 11 is an exemplary block diagram showing the head device H according to the third embodiment.

Elements in common with Fig.3 have the same symbols and their detailed explanations are omitted. The composition of the head device H according to the third embodiment differs from the first embodiment in that the CPU H2 is modified to CPU H2c.

According to the third embodiment, a control signal sent from the head device H by the second medium is a signal to control the substitute receiving of data from the remote device R (target device). Specifically, the control signal (second control signal) is, for example, the substitute receiving request to request a substitute receiving of data from a remote device R (target device).

The CPU H2c serves as a controller executing processes set forth below.

The CPU H2c controls the transceiver H4 to send a substitute receiving request to at least one head device H by the second medium when the signal processor H3 fails to receive by the first medium for predetermined times.

The CPU H2c controls the signal processor H3 to receive a signal sent from the remote device R by the first medium when the transceiver H4 receives a substitute receiving request from another head device H by the second medium.

The CPU H2c makes the transceiver H4 send a substitute receiving success notice to another head device H by the second medium when the signal processor H3 receives a signal from the remote device R by the first medium. Also, the CPU H2c controls the signal processor H3 to send an ACK to the remote device R by the first medium.

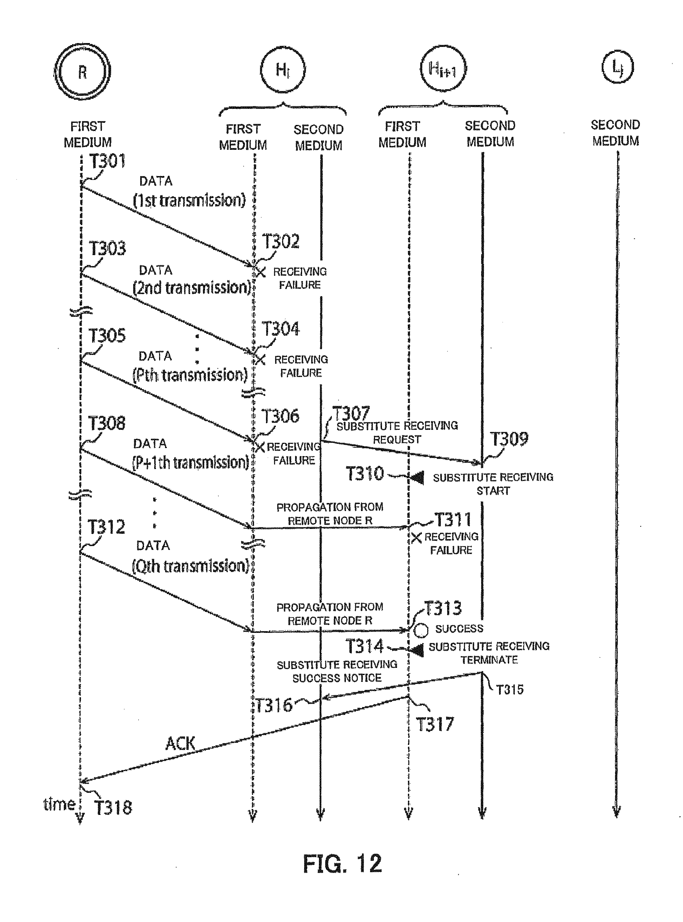

Fig. 12 is an exemplary diagram showing a sequence of the communication system according to the third embodiment.

As shown in Fig. 12, the remote device R sends the same data up to Q times. Q is a positive integer. The i-th head device $H_i$ sends a substitute receiving request to surrounding head devices H by the second medium if the i-th head device fails to receive for P times. P is a positive integer and smaller than Q. Specific process will be presented.

(T301) At first the remote device R sends data by the first medium.

(T302) The i-th head device $H_i$ receives data by the first medium, decodes the received data, and detects an error in the signal obtained by the decoding (first failure of receiving).

(T303) The remote device R sends the data for the second time by the first medium.

(T304) the i-th head device $H_i$, for example, receives data by the first medium, decodes the received data, and detects an error in the signal obtained by the decoding (second failure of receiving).

(T305) The remote device R sends a data for the P-th time by the first medium.

(T306) The i-th head device $H_i$, for example, receives data by the first medium, decodes the received data, and detects an error in the signal obtained by the decoding (P-th failure of receiving).

(T307) The i-th head device $H_i$ sends a substitute receiving request to a plurality of head devices H including the (i+1)-th head device $H_{i+1}$.

If the (i+1)-th head device $H_{i+1}$ receives the substitute receiving request, the (i+1)-th head device $H_{i+1}$ starts the first medium modem H31 and starts to demodulate the signal from the remote device R (starting a substitute receiving). As a result, the (i+1)-th head device $H_{i+1}$ can start receiving the data from the (P+1)-th data sent from the remote device R. If the (i+1)-th head device $H_{i+1}$ succeeds in receiving data sent from the remote device R, the first medium modem H31 terminates the process (termination of the substitute receiving). The (i+1)-th head device $H_{i+1}$ sends a substitute receiving success notice to the i-th head device $H_i$ by the second medium. Also, the (i+1)-th head device sends an ACK to the remote device R by the first medium. Specific process will be presented below.

(T308) The remote device R sends a (P+1)-th data by the first medium.

(T309) The (i+1)-th head device $H_{i+1}$ receives a substitute receiving request.

(T310) The (i+1)-th head device $H_{i+1}$ starts the first medium modem H31 and starts demodulating a signal received from the remote device R (starting a substitute receiving).

(T311) The (i+1)-th head device $H_{i+1}$, for example, receives data sent by the first medium, decodes the received signal, and detects an error in a signal obtained by the decoding (failure of receiving).

(T312) The remote device R executes Q-th sending by the first medium.

(T313) The (i+1)-th head device $H_{i+1}$, for example, receives data which is sent by the first medium, decodes a received signal, detects no error in the signal obtained by the decoding (success of receiving).

(T314) The (i+1)-th head device $H_{i+1}$ terminates a process of the first medium modem H31 (termination of the substitute receiving).

(T315) The (i+1)-th head device $H_{i+1}$ sends a substitute receiving success notice to the i-th head device $H_i$ by the second medium.

(T316) The i-th head device $H_i$ receives the substitute receiving success notice from the (i+1)-th head device $H_{i+1}$ by the second medium.

(T317) The (i+1)-th head device $H_{i+1}$ sends an ACK to the remote device R by the first medium.

(T318) The remote device R receives the ACK from the (i+1)-th head device $H_{i+1}$ by the first medium.

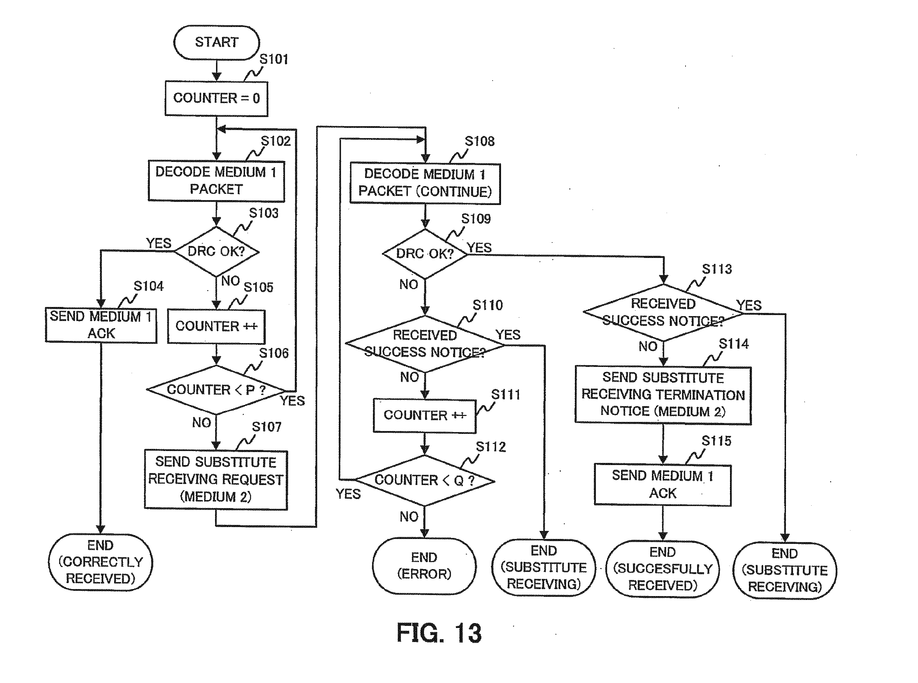

Fig. 13 is an exemplary flowchart showing a process of the i-th head device $H_i$ according to the third embodiment.

(Step S101) The CPU H2c sets a counter at 0.

(Step S102) The CPU H2c decodes a packet received by the first medium.

(Step S103) The CPU H2c determines whether the decoded data includes an error or not by using a CRC (Cyclic Redundancy Check) value. If the CPU H2c determines there is no error (YES), the process goes to a step S104. If the CPU H2c determines there is an error (NO), the process goes to a step S105.

(Step S104) The CPU H2c controls the signal processor H31 to send an ACK to the remote device R by the first medium.

(Step S105) The CPU H2c increments the counter value by 1.

(Step S106) The CPU H2c determines the counter value is lower than P or not. If the counter value is lower than P (YES), the CPU H2c returns to the step S102. If the counter value is equal to or higher than P (NO), the CPU H2c goes to a step S107.

(Step S107) The CPU H2c controls the transceiver H31 to send a substitute receiving request to the (i+1)-th head device $H_{i+1}$ by the second medium.

(Step S108) The CPU H2c continues to decode a packet of the first medium.

(Step S109) The CPU H2c determines whether the decoded data includes an error or not by a CRC value. If the CPU H2c determines there is no error (YES), the process goes to a step S113. If the CPU H2c determines there is an error (NO), the process goes to a step S110.

(Step S110) The CPU H2c determines whether or not the transceiver H4 receives a substitute receiving success notice or not. If the transceiver H4 has received a substitute receiving success notice, the CPU H2c terminates the process because a substitute receiving succeeded. If the transceiver H4 has not received a substitute receiving success notice, the CPU H2c goes to a step S111.

(Step S111) The CPU H2c increments the counter value by 1.

(Step S112) The CPU determines whether the counter value is smaller than Q or not. If the counter value is smaller than Q (YES), the CPU H2c returns to the step S108.

(Step S113) The CPU H2c determines whether the transceiver H4 receives a substitute receiving success notice or not. If the transceiver H4 has received a substitute receiving success notice (YES), the CPU H2c terminates the process because a substitute receiving succeeded. In this case, the CPU H2c does not send an ACK by the first medium, because the (i+1)-th head device $H_{i+1}$ sends an ACK by the first medium. If the transceiver H4 has not received a substitute receiving success notice (NO), the CPU goes to a step S114.

(Step S114) The i-th head device $H_i$ succeeded receiving data from the remote device R, and has not received a substitute receiving success notice from the other head devices H. Therefore, the CPU H2c controls the transceiver H4 to send a substitute receiving termination notice to other head devices including the (i+1)-th head device $H_{i+1}$ by the second medium. The CPU H2c can terminates the substitute receiving by other head devices including the (i+1)-th head device $H_{i+1}$ in this manner.

(Step S115) The CPU H2c controls the signal processor H3 to send an ACK to the remote device R by the first medium 1 because the i-th head device $H_i$ succeeded in receiving data from the remote device R.

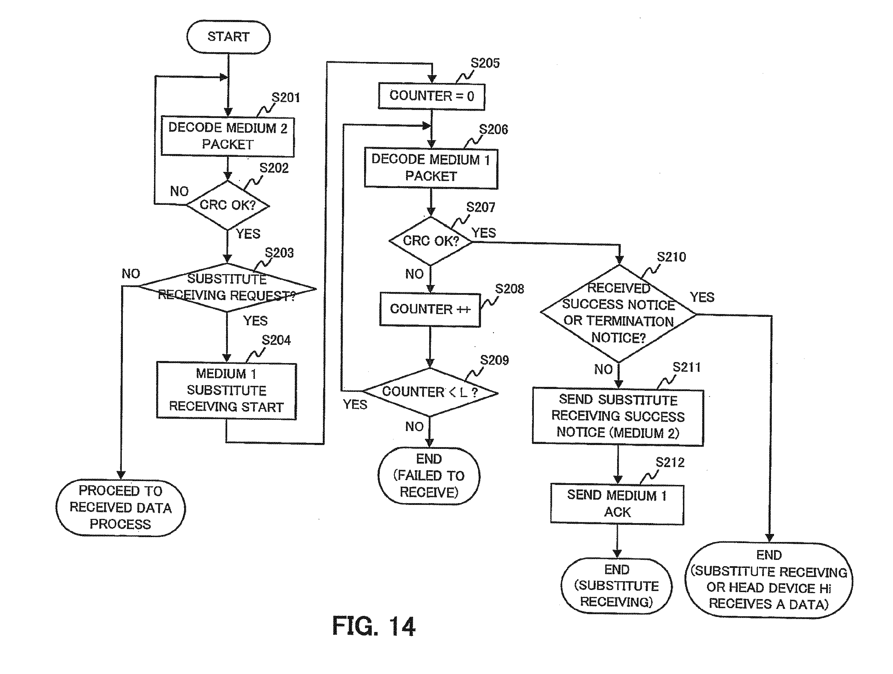

Fig. 14 shows an exemplary flowchart of a process of the (i+1)-th head device $H_{i+1}$ according to the third embodiment.

(Step S201) The CPU H2c decodes a packed received by the second medium.

(Step S202) The CPU H2c determines whether the decoded data includes an error or not by a CRC value. If the CPU H2c determines that there is no error (YES), the process goes to a step S203. If the CPU H2c determines there is an error (NO), the process returns to the step S201.

(Step S203) The CPU H2c determines whether the signal obtained by the decoding is a substitute receiving request or not. If the signal is a substitute receiving request (YES), the CPU H2c goes to a step S204. The substitute receiving request is sent from the i-th head device as shown in Fig. 12, for example. If the signal is not a substitute receiving request (NO), the CPU H2c goes to a process of receiving signal processing for the signal obtained by the decoding.

(Step S204) The CPU H2c starts the first medium modem H31 and starts the substitute receiving by the first medium.

(Step S205) The CPU H2c sets a counter value at 0.

(Step S206) The CPU H2c decodes a packet which is received by the first medium.

(Step S207) The CPU H2c determines whether the decoded data includes an error or not by using a CRC value. If the CPU H2c determines that there is no error (YES), the process goes to a step S210. If the CPU H2c determines that there is an error (NO), the process goes to a step S208.

(Step S208) The CPU H2c increments the counter value by 1.

(Step S209) The CPU H2c determines whether the counter value is smaller than L or not. L is a positive integer. If the counter value is smaller than L (YES), the CPU H2c returns to the step S208. If the counter value is equal to or larger than L, the CPU terminates a process. The situation in which the counter value is equal to or larger than L means that a substitute receiving failed.

(Step S210) The CPU H2c determines whether the transceiver H4 has received a substitute receiving success notice or not. If the transceiver H4 has received a substitute receiving success notice or a substitute receiving termination notice (YES), the CPU H2c terminates the process. This occurs because another head device which was requested to perform substitute receiving by the i-th head device has succeeded a substitute receiving, or the i-th head device $H_i$ has succeeded in receiving of a data by itself.

In this case, the (i+1)-th head device $H_{i+1}$ does not send an ACK by the first medium because another head device which succeeded in substitute receiving or the i-th head device $H_i$ which succeeded in receiving by itself sent an ACK to the remote device R. If the transceiver H4 has not received the substitute receiving success notice or the substitute receiving termination notice (NO), the CPU H2c goes to a step S211.

(Step S211) The CPU H2c controls the transceiver H4 to send a substitute receiving success notice to the i-th head device $H_i$ and other head devices H which are requested to perform substitute receiving, because the (i+1)-th head device $H_{i+1}$ succeeded in receiving data from the remote device R and does not receive a substitute receiving success notice from other head devices H.

(Step S212) The CPU H2c controls the signal processor H3 to send an ACK to the remote device R.

As above described, according to the third embodiment, the CPU H2c of the i-th head device $H_i$ controls the transceiver to send a substitute receiving request to at least another head device H by the second medium when the signal processor H3 failed to receive by the first medium for a predetermined times. If the transceiver H4 of another head device H receives the substitute receiving request from the head device H by the second medium, the CPU H2c of the another head device H controls the signal processor to receive a signal which was sent from the remote signal by the first medium.

As a result, the CPU of the i-th head device can make another head device H perform substitute receiving from the remote device by the first medium. If the i-th head device $H_i$ fails to receive, another head device H can receive as a substitute. Therefore a success rate of a communication between the remote device R and the plurality of head device H can be improved.

Fourth Embodiment

According to the fourth embodiment, a signaling quality of the first medium is improved by a signaling using the second medium. In the fourth embodiment, the head device sends data to the remote device R.

The head device H sends the same data for a plurality of times continuously to the remote device R, but the communications may fail. To solve the problem, in this embodiment, when the i-th head device $H_i$ fails sending, the i-th head device $H_i$ asks surrounding head devices H to do a substitute sending, and improve a success rate of a communication by the substitute sending.

A composition of a communication system 1 d according to the fourth embodiment is the same as the communication system 1c of the third embodiment shown in Fig. 9, so the explanation is omitted.

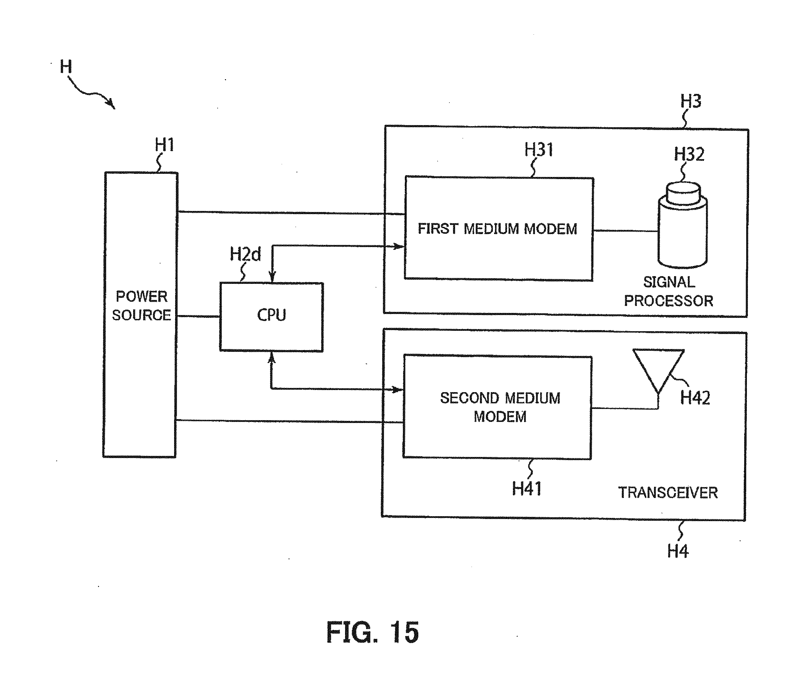

Fig. 15 is an exemplary block diagram showing the head device H according to the fourth embodiment. Elements in common with Fig.3 have the same symbols and their detailed explanations are omitted. The composition of the head device H according to the fourth embodiment differs from the first embodiment in that the CPU H2 is modified to CPU H2d.

According to the fourth embodiment, a control signal which is sent from the head device H by the second medium is a signal to control a substitute sending by the first medium. Specifically, the control signal (third control signal) is, for example, a substitute sending request to ask a substitute sending by the first medium.

The CPU H2d serves as a controller to execute a process described below.

The CPU H2d controls the transceiver H4 to send a substitute sending request and data to at least one of the other head devices H by the second medium when the signal processor H3 failed sending by the first medium for predetermined times.

If the transceiver H4 receives a substitute sending request and data from another head device H by the second medium, the CPU H2d controls the signal processor H3 to send the data to the remote device R by the first medium.

If the signal processor H3 receives an ACK from the remote device R by the first medium after sending data to the remote device R, the CPU H2d controls to send a substitute sending success notice to the at least one of the head devices H from which the substitute sending request was sent.

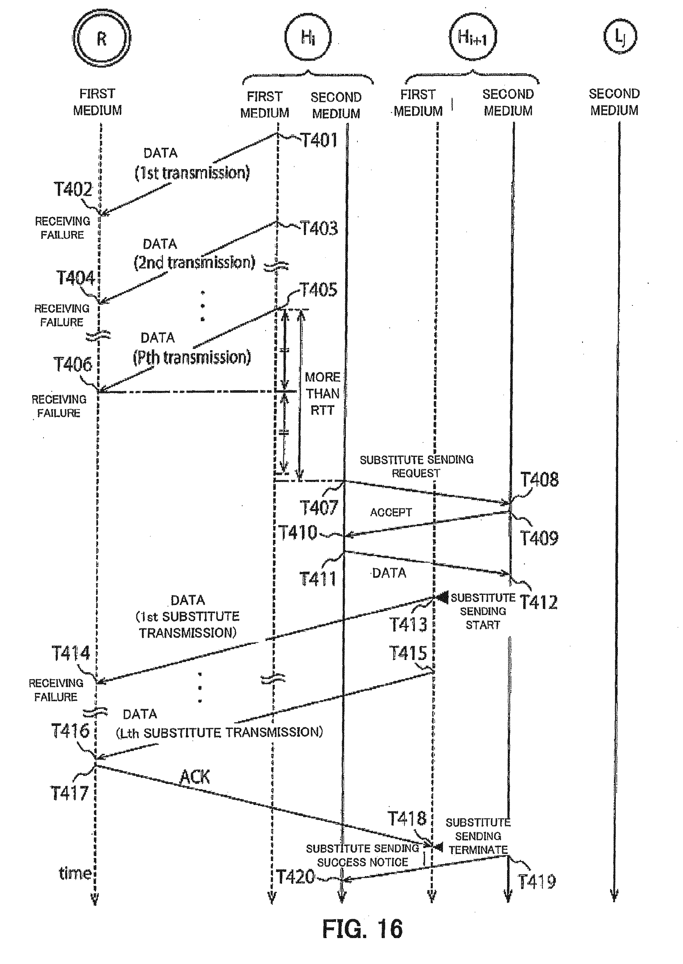

Fig. 16 is an exemplary diagram showing a sequence of a communication system 1d according to the fourth embodiment.

When the i-th head device $H_i$ sends data for a predetermined times (P times) and determines that all transmissions were failed, the i-th head device $H_i$ sends a substitute sending request to another head device H (for example, surrounding head device H) by the second medium. The i-th head device $H_i$ determines that the transmission is failed if an ACK is not received from the remote device R for the duration of more than the supposed RTT. Specific process is provided.

(T401) At first, the i-th head device $H_i$ sends data by the first medium for the first time.

(T402) The remote device R may receive data which was sent by the first medium, decode the received data, and detect an error in the signal obtained by the decoding (First failure of receiving).

(T403) The i-th head device $H_i$ sends the data by the first medium for the second time.

(T404) The remote device R may receive data which was sent by the first medium, decode the received data, and detect an error in the signal obtained by the decoding (Second failure of receiving).

(T405) The i-th head device $H_i$ sends the data by the first medium for the P-th time.

(T406) The remote device R may receive data which was sent by the first medium, decode the received data, and detect an error in the signal obtained by the decoding (P-th failure of receiving).

(T407) The i-th head device $H_i$ sends a substitute sending request to another head device H by the second medium after more than RTT from the time T405.

If the (i+1)-th head device $H_{i+1}$ receives the sub-

stitute sending request, the (i+1)-th head device $H_{i+1}$ sends a substitute sending accept signal indicating to accept a substitute sending by the second medium. The i-th head device $H_i$ sends data which will be sent from the (i+1)-th head device $H_{i+1}$ as a substitute to the (i+1)-th head device $H_{i+1}$ by the second medium.

The (i+1)-th head device $H_{i+1}$ starts the first medium modem H31 and sends the substitute send data which was received from the i-th head device $H_i$ to the remote device R by the first medium. If the (i+1)-th head device $H_{i+1}$ receives an ACK from the remote device R by the first medium, the first medium modem H31 terminates an operation (termination of a substitute sending). The (i+1)-th head device $H_{i+1}$ sends a substitute sending success notice indicating that the substitute sending to the i-th head device $H_i$ by the second medium succeeded. Specific example of this process is provided below.

(T408) The (i+1)-th head device $H_{i+1}$ receives a substitute sending request from the i-th head device $H_i$ by the second medium.

(T409) The (i+1)-th head device $H_{i+1}$ sends a substitute sending accept signal to the i-th head device $H_i$ by the second medium.

(T410) The i-th head device $H_i$ receives the substitute sending accept signal from the (i+1)-th head device $H_{i+1}$ by the second medium.

(T411) The i-th head device $H_i$ sends a substitute send data to the (i+1)-th head device $H_{i+1}$ by the second medium.

(T412) The (i+1)-th head device $H_{i+1}$ receives the substitute send data from the (i+1)-th head device $H_{i+1}$ by the second medium.

(T413) The (i+1)-th head device $H_{i+1}$ starts the first medium modem H31 and sends the substitute send data which was received from the (i+1)-th head device $H_{i+1}$ by the first medium for the first time.

(T414) The remote device R, for example, receives a substitute send data by the first medium, decodes the received signal, and detects an error in the signal obtained by the decoding (failure of receiving).

(T415) The (i+1)-th head device $H_{i+1}$ sends the substitute send data which was received from the (i+1)-th head device $H_{i+1}$ to the remote device R by the first medium for the L-th time.

(T416) The remote device R, for example, receives the substitute send data which was sent for the L-th time by the first medium, decodes the received signal, and detects no error in the signal obtained by the decoding (Success of receiving).

(T417) The remote device R sends an ACK to the (i+1)-th head device $H_{i+1}$ by the first medium.

(T418) The (i+1)-th head device $H_{i+1}$ receives an ACK from the remote device R by the first medium, and the first medium modem H31 terminates operation (termination of a substitute sending).

(T419) The (i+1)-th head device $H_{i+1}$ sends a substitute sending success notice to the i-th head device $H_i$ by the second medium.

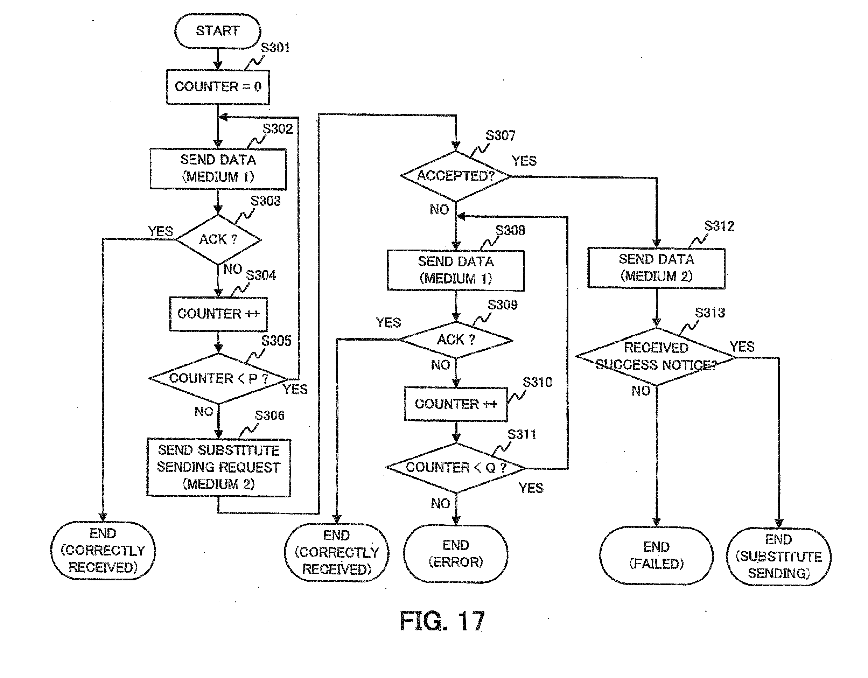

Fig. 17 is an exemplary flowchart showing a process of the i-th head device according to the fourth embodiment.

(Step S301) The CPU H2d sets a counter value at 0.

(Step S302) The CPU H2d sends data to the remote device R by the first medium.

(Step S303) The CPU H2d determines whether or not the signal processor H3 has received an ACK from the remote device R by the first medium. If the signal processor H3 receives an ACK has received an ACK (YES), the CPU (H2d) terminates the process, because the remote device R received the data correctly. If the signal processor H3 has not received an ACK (NO), the CPU H2d goes to a step S304.

(Step S304) The CPU H2d increments the counter value by 1.

(Step S305) The CPU H2d determines whether the counter value is smaller than P or not. If the counter value is smaller than P (YES), the CPU H2d returns to the step S302. If the counter value is equal to or larger than P (NO), the CPU H2d goes to a step S306.

(Step S306) The CPU H2d controls the transceiver H4 to send a substitute sending request by the second medium.

(Step S307) The CPU H2d determines whether the transceiver H4 has received a substitute sending accept signal or not. If the transceiver has received a substitute sending accept signal (YES), the CPU H2d goes to a step S312. If the transceiver H4 has not received a substitute sending accept signal (NO), the CPU H2d goes to a step S308.

(Step S308) The CPU H2d controls the signal processor H3 to send data to the remote device R by the first medium.

(Step S309) The CPU H2d determines whether or not the signal processor H3 has received an ACK from the remote device R by the first medium. The signal processor H3 receives an ACK (YES), the CPU H2d terminates the process, because the remote device R received the data correctly. If the signal processor H3 has not received an ACK (NO), the CPU H2d goes to a step S310.

(Step S310) The CPU H2d increments the counter value by 1.

(Step S311) The CPU H2d determines whether the counter value is smaller than Q or not. If the counter value is smaller than Q (YES), the CPU H2d returns to the step S308. If the counter value is equal to or larger than Q (NO), the CPU H2d terminates the process. In this case, the process is terminated despite the remote device R not receiving data correctly.

(Step S312) The CPU H2d controls the transceiver H4 to send substitute send data to the head device H which sent the substitute sending accept signal by the second medium. According to an example shown Fig. 16, the head device H which sent the substitute sending accept signal is the (i+1)-th head device $H_{i+1}$.

(Step S313) The CPU H2d determines whether a substitute sending success notice is received or not in a predetermined time period from the head device H ((i+1)-th head device $H_{i+1}$ according to the example shown in Fig. 16) to which the substitute send data was sent. If a substitute sending success notice is received (YES), the CPU H2d terminates the process. In this case, the substitute sending succeeded. If the substitute sending success notice has not been received (NO), the CPU H2d terminates the process. In this case, the substitute sending failed.

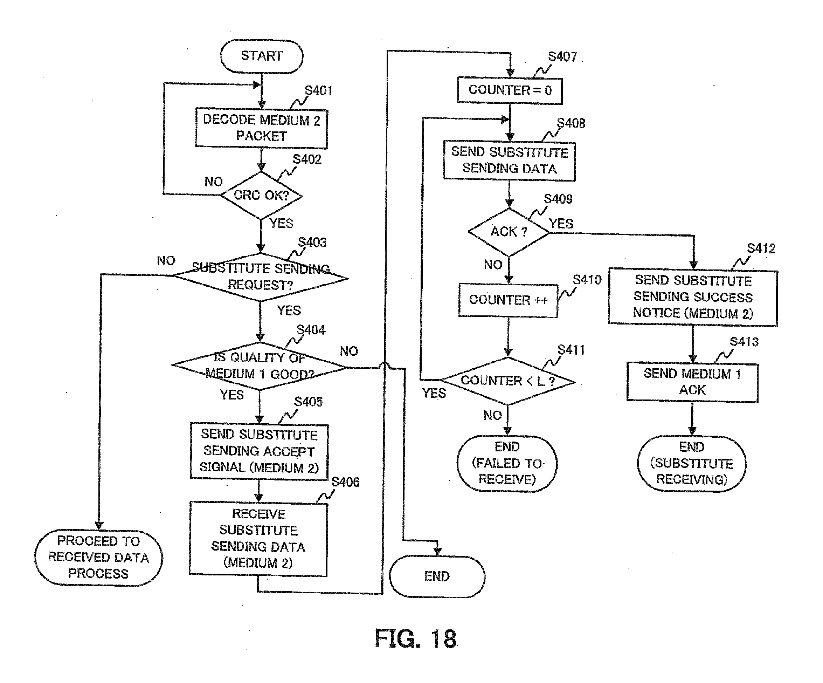

Fig. 18 is an exemplary flowchart showing a process of the (i+1)-th head device $H_{i+1}$ according to the fourth embodiment.

(Step S401) At first the CPU H2d decodes a packet received by the second medium.

(Step S402) The CPU H2d determines whether the decoded signal contains an error or not by a CRC value. If the CPU H2d determines that there is no error (YES), the process goes to a step S403. If the CPU H2d determines there is an error (NO), the process returns to the step S401.

(Step S403) The CPU H2d determines whether the signal obtained by the decoding is a substitute sending request or not. If the signal obtained by the decoding is a substitute sending request (YES), the CPU H2d goes to a step S404. If the signal obtained by the decoding is not a substitute sending (NO), the CPU H2d goes to a received signal processing for the decoded data.

(Step S404) The CPU H2d determines whether the communication quality of the first medium is good or not. If the communication quality of the first medium is good (YES), the CPU H2d goes to a step S405. If the communication quality of the first medium is not good (NO), the CPU H2d terminates the process.

(Step S405) The CPU H2d controls the transceiver H4 to send a substitute sending accept signal by the second medium to the head device which requested the substitute sending (i-th head device $H_i$ according to the example shown in Fig. 16).

(Step S406) The transceiver H4 receives a substitute send data by the second medium from the head device which requested the substitute sending (i-th head device $H_i$ according to the example shown in Fig. 16).

(Step S407) The CPU H2d sets the counter value at 0.

(Step S408) The CPU H2d controls the signal processor H3 to send the substitute send data to the remote device R by the first medium.

(Step S409) The CPU H2d determines whether the signal processor H3 has received an ACK from the remote device R by the first medium or not. If the signal processor H3 has received an ACK (YES), the CPU H2d goes to a step S412. If the signal processor H3 has not received an ACK (NO), the CPU H2d goes to a step S410.

(Step S410) The CPU H2d increments the counter value by 1.

(Step S411) The CPU H2d determines whether the counter value is smaller than L or not. If the counter value is smaller than L (YES), the CPU H2d returns to a step S408. If the counter value is equal to or larger than L (NO), the CPU H2d terminates the process. In this case, the substitute sending fails.

(Step S412) The CPU H2d controls the transceiver H4 to send a substitute sending success notice by the second medium to the head device which requested the substitute sending (i-th head device $H_i$ according to the example shown in Fig. 16).

(Step S413) The CPU H2d controls the signal processor H3 to send an ACK by the first medium to the remote device R and terminates the process. In this case, the substitute sending succeeds.

As described above, according to the fourth embodiment, if the signal processor H3 of the i-th head device $H_i$ failed sending data by the first medium for a number of predetermined times, the CPU H2d controls the transceiver H4 to send a substitute sending request and the data to at least one of the other head devices H by the second medium. If the transceiver H4 of the (i+1)-th head device $H_{i+1}$ receives the substitute sending request and the data from the i-th head device $H_i$ by the second medium, the CPU H2d controls the signal processor H3 to send the received data to the remote device R by the first medium.

As a result, the CPU H2d of the i-th head device $H_i$ can make a head device H other than the i-th head device send data as a substitute. In this way, the head device H other than the i-th head device can send as a substitute when the i-th head device H fails sending, so a success rate of a communication between the remote device R and the plurality of head devices H is improved.

As an example to develop the third and the fourth embodiments, an embodiment of a cooperative communication is possible. In the cooperative communication, the plurality of head devices H receive signals of the first medium at the same time. In the cooperative communication, the sending can occur at the same time or different times. In the following explanation, it is assumed that the sending occurs at the same time.

For example, in the cooperative receiving, each head device sends a signal received by the first medium to one head device H by the second medium. As a result, received signals at the head devices H are collected at the one head device H. The one head device H combines the collected received signals, and conducts a demodulation and decoding.

Specifically, for example, assume that a first and a second head devices receive signals of the first medium correctly. In this case, the first and the second head devices demodulate received signal of the first medium to obtain symbols, and calculate LLRs (Log-Likelihood Ratio) from the symbols. The second head device sends the calculated LLR to the first head device by the second medium.

The first head device receives LLR from the second head device. The first head device combines the LLR calculated by the first head device with the LLR received from the second head device. For example, the first head device adds the LLR calculated by the first head device to the LLR received from the second head device. Then, the first head device decodes a value obtained by the adding. In doing the decoding, for example, the first head device makes a hard decision by using the value obtained by the adding. In this way, the first head device can obtain an original signal sent from the remote device in high restoration rate.

Also, in the cooperative sending, one head device can distribute data that is the same as data which is sent by the first medium to another head device by the second medium. Each head device can send the data by the first medium. In this way, even if the remote device cannot receive data from one head device, the remote device may receive data from another head device. As a result, a rate of receiving by the remote device can be improved. In this case, an array signal processing to set amplitude or phase to converge energies at the remote device is effective.

In the cooperative sending according to above explanation, one head device causes another head device to send data that is the same as data which is sent from the one head device by the first medium, but it is not limited to it. The one head device can cause another head device to send a part of the data by the first medium. The one head device can divide the data, send a part of the divided data by the first medium, and distribute the other parts of the divided data to another head device. The another head device sends the other parts of the divided data serially.

According to the above explanation, a control signal can be a signal to control a cooperative receiving by at least one of the other communication devices. The at least one of the other communication devices receives a signal from the remote device (target device) R by the first medium and forwards the signal to the head device which sent the control signal.

The control signal also can be a signal to control a cooperative sending to send a part of data or at least one of divided send data by the first medium.

In the cooperative receiving and the cooperative sending, it is required to share a clock signal and time information between the head devices. Sharing of the clock signal and the time information may be required for other purposes. One purpose is to designate a start time and a finish time of a data sampling process of each sensor in the head device and the local devices. Another purpose is to generate time stamp information corresponding to sampling data. Another purpose is to designate a start time and a finish time of a signal sending or receiving process.

In this case, the control signal can be a signal to synchronize a time with another head device. For example, a head device sends the control signal to another head device by the second medium. The another head device can receive the control signal by the second medium, and change a timing of a clock signal or a stored time information based on the received control signal. As a result, the timing of the clock signal or the stored time information can be made consistent between head devices.

In the above explained embodiments, the second medium is assumed as a signal medium different from the first medium. The second medium can be same signal medium as the first medium. In this case, each head device H can be set to have a directional characteristic of the first transducer H32 that differs from a directional characteristic of the second transducer H42 so as not to interfere with communication or a measurement by the first medium and a communication by the second medium. Also, each head device H can be set at sending and receiving timing of the first transducer H32 that differs from a sending and receiving timing of the second transducer H 42 so as not to interfere with communication or a measurement by the first medium and a communication by the second medium.

Programs to execute processes of head devices, remote device, and local devices according to each embodiment can be stored in a computer readable media. The programs stored in the computer readable media can be read by computer system, and the computer system can execute processes of the head device, the remote device, and the local device.

The computer system can includes hardware such as an OS and peripheral devices. If the computer system uses WWW system, the computer system may supply a homepage, or the computer system may include a display. The computer readable medium can be a writeable non-volatile memory such as a flexible disk, a magnetic optical disk, a ROM and a flash memory, a portable medium such as CD-ROM, and a built-in storage device such as a hard disk built into the computer system.

The computer readable medium may include a volatile memory built into the computer system which may serve as a server or a client if the program was provided via a communication link such as a phone line or the internet. A memory holding the program for a predetermined time such as DRAM (Dynamic Random Access Memory) is an example of the volatile memory. The program can be sent from the computer system of which storage device holds the program to another computer system via a transmission medium or transmitted wave of the transmission medium. The transmission medium to transmit the program is a medium having a function to transmit information. A network (communication link) such as the internet and a communication line such as a phone like can be the transmission medium. The program can be to realize a part of above described functions. Also, the program can be a difference file (difference program). The difference file and programs which have already been stored in the computer system are combined to realize above described functions.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

**Claims**

1. A communication device, comprising
   a signal processing device using a first signal medium;
   a transceiver to communicate with at least one of first devices by using a second signal medium; and
   a controller to control usage of the first signal medium by the communication device and the at least one of first devices by communicating with the at least one of first devices by the transceiver.

2. The communication device according to the claim 1, wherein the controller controls the usage of the first signal medium by the signal processing device when the transceiver receives a control signal from the first device.

3. The communication device according to the claim 1, wherein the signal processing device executes a data communication or a measurement by the first medium.

4. The communication device according to the claim 1, wherein the transceiver transmits a control signal to the at least one of first devices before the signal processing device uses the first signal medium, the control signal being a use request of the first signal medium.

5. The communication device according to the claim 4, wherein the controller controls the signal processing device to halt the usage of the first medium when the transceiver receives the use request from one of the first devices.

6. The communication device according to the claim 1, wherein the transceiver transmits a control signal to the at least one of first devices, the control signal being a request of a substitute communication with a target device.

7. The communication device according to claim 1, wherein the signal processing device communicates with a target device and the control signal is a first control signal, and the transceiver transmits a second control signal to the at least one of first devices if the signal processing device fails to successfully communicate for a predetermined number of times, the second control signal being a request of a substitute communication with the target device.

8. The communication device according to claim 7, wherein the signal processing device communicates with the target device as a substitute if the transceiver receives the second control signal from the first device.

9. The communication device according to claim 8, wherein if the signal processing device succeeds in communicating with the target device as the substitute, the transceiver sends a substitute communication success notice to the first device and the signal processing device sends an ACK to the target device.

10. The communication device according to claim 7, wherein the transceiver transmits a third control signal to the at least one of first devices if the signal processing device fails to receive data from the target device for a predetermined number of times, the third control signal being a request of a substitute receiving from the target device.

11. The communication device according to claim 7, wherein the transceiver transmits a third control signal to the at least one of first devices if the signal processing device fails to send data from the target device for a predetermined number of times, the third control signal being a request of a substitute sending to the target device.

12. The communication device according to claim 11, wherein if the transceiver receives the third control signal and data from the first device, the signal processing device sends the data to the target device as a substitute.

13. The communication device according to claim 11, wherein if the signal processing device receives an ACK from the target device after the third control signal is sent from the first device, the transceiver send a substitute sending success notice to the first device.

14. The communication device according to claim 1, wherein the transceiver transmits a control signal to the at least one of first devices, the control signal being a request of a cooperating receiving or a cooperative sending.

15. The communication device according to claim 1, wherein the transceiver transmits a control signal to the at least one of first devices, the control signal being a signal to synchronize a time with the first device.

16. The communication device according to claim 1, wherein the transceiver sends a control signal via at least one of the first devices.

17. The communication device according to claim 1, wherein the first signal medium is an acoustic wave and the second signal medium is light, an electromagnetic wave, or a magnetic field.

18. A communication method to send data by a first signal medium, comprising:

   sending a control signal to at least one of first devices by a second signal medium;
   waiting more than a first time which is determined based on a time for the control signal to reach the at least one of first devices; and
   sending the data to a target device by the first signal medium after waiting more than the first time.

19. The communication method according to claim 18, further comprising:

   halting a communication between the target device by the first signal medium when a control signal is received from one of the first devices by the second signal medium.

20. An communication method, comprising:

   communicating with a target device by a first signal medium;
   sending a control signal to at least one of first devices by a second signal medium if the communication with the target device fails for more than a predetermined number of times.

FIG. 1

FIG. 2

FIG. 3

**FIG. 4**

FIG. 5

EP 2 858 274 A2

FIG. 6

EP 2 858 274 A2

**FIG. 7**

FIG. 8

EP 2 858 274 A2

FIG. 9

FIG. 10

EP 2 858 274 A2

FIG. 11

FIG. 12

**FIG. 13**

START

DECODE MEDIUM 2 PACKET — S201

S202 CRC OK? — NO / YES

S203 SUBSTITUTE RECEIVING REQUEST? — NO / YES

S204 MEDIUM 1 SUBSTITUTE RECEIVING START

PROCEED TO RECEIVED DATA PROCESS

S205 COUNTER = 0

S206 DECODE MEDIUM 1 PACKET

S207 CRC OK? — NO / YES

S208 COUNTER ++

S209 COUNTER < L ? — YES / NO

END (FAILED TO RECEIVE)

S210 RECEIVED SUCCESS NOTICE OR TERMINATION NOTICE? — NO / YES

S211 SEND SUBSTITUTE RECEIVING SUCCESS NOTICE (MEDIUM 2)

S212 SEND MEDIUM 1 ACK

END (SUBSTITUTE RECEIVING)

END (SUBSTITUTE RECEIVING OR HEAD DEVICE Hi RECEIVES A DATA)

FIG. 14

FIG. 15

**FIG. 16**

START

S301 COUNTER = 0

S302 SEND DATA (MEDIUM 1)

S303 ACK ?
— YES → END (CORRECTLY RECEIVED)
— NO S304

COUNTER ++

S305 COUNTER < P ?
— YES → S307 ACCEPTED?
— NO S306

SEND SUBSTITUTE SENDING REQUEST (MEDIUM 2)

S307 ACCEPTED?
— YES → S312 SEND DATA (MEDIUM 2)
— NO

S308 SEND DATA (MEDIUM 1)

S309 ACK ?
— YES → END (CORRECTLY RECEIVED)
— NO

S310 COUNTER ++

S311 COUNTER < Q ?
— YES → (back to S307 ACCEPTED?)
— NO → END (ERROR)

S312 SEND DATA (MEDIUM 2)

S313 RECEIVED SUCCESS NOTICE?
— YES → END (SUBSTITUTE SENDING)
— NO → END (FAILED)

FIG. 17

FIG. 18